# EUROPÄISCHE PATENTSCHRIFT

(11) **EP 0 629 472 B1**
(45) Veröffentlichungstag und Bekanntmachung des Hinweises auf die Patenterteilung: **18.11.1998**
(21) Anmeldenummer: 94109046.6
(22) Anmeldetag: 13.06.1994
(51) Int. Cl.: B24D 3/06, B24D 3/08, B23K 31/02, B23D 61/04, E21B 10/48

(54) **Abrasivwerkzeug mit einer Sintermetallbindung enthaltend Metallsulfide**
Abrasive tool with sinter metal bond comprising metal sulphides
Outil abrasif avec liant métallique fritté comprenant des sulfures métalliques

(30) Priorität: 17.06.1993 AT 1194/93
(43) Veröffentlichungstag der Anmeldung: 21.12.1994
(73) Patentinhaber: Tyrolit Schleifmittelwerke Swarovski KG, 6130 Schwaz (AT)
(72) Erfinder: Neubach, Stefan, Dipl.-Ing., A-6135 Stans (AT)

(56) Entgegenhaltungen:
- EP-A- 0 425 789
- EP-A- 0 461 951
- FR-A- 2 129 687
- PATENT ABSTRACTS OF JAPAN vol. 11, no. 114 (M-579) 10. April 1987 & JP-A-61 257 777 (OSAKA DAIYAMONDO KOGYO K.K.) 15. November 1986
- DATABASE WPI Section Ch, Week 8702, Derwent Publications Ltd., London, GB; Class MLD, AN 87-007410 C02! & CA-A-1 214 984 (NORTON CO.) 9. Dezember 1986
- DATABASE WPI Section Ch, Week 9131, Derwent Publications Ltd., London, GB; Class LMF, AN 91-228199 C31! & JP-A-03 149 186 (TOSHIBA K.K.) 25. Juni 1991

## Beschreibung

Die Erfindung bezieht sich auf ein Abrasivwerkzeug, bestehend aus einem Stahlträgerkörper und durch Schweißen, insbesondere durch Laserschweißen, damit verbundene, mit einer Sintermetallbindung unter Verwendung von einem oder mehreren hochschmelzenden Metallpulvern gebundene, Hochleistungsschneidstoff, wie Diamant und/oder kubisches Bornitrid, enthaltende Schneidsegmente, wobei eine vorzugsweise schneidstofflose Bindungszone zwischen dem Stahlträgerkörper und der schneidstoffhaltigen Verschleißzone der Schneidsegmente angeordnet ist.

Die Erfindung betrifft weiters die Verwendung solcher Abrasivwerkzeuge zum Trennschleifen und Bohren von gesteinsartigen Werkstoffen.

Solche Werkzeuge sind allgemein bekannt und werden zum Formbearbeiten, Trennen und Bohren von Metall, Glas, Naturstein, Kunststein, Beton, Keramik und mit Fasern oder Füllstoffen verstärkten oder unverstärkten Kunststoffen verwendet. Es handelt sich dabei um abrasive Verfahren für Naß- und Trockeneinsatz. Der eigentliche Schneidstoff, der dabei verwendet wird, ist bevorzugt ein Hochleistungsschleifmittel wie kubisches Bornitrid oder Diamant mit Korngrößen von 150 bis 900 µm.

Eine gleichrangige Aufgabe wie der Schneidstoff erfüllt in erfindungsgemäßen Abrasivwerkzeugen die Sintermetallbindung. Aus dem Stand der Technik sind folgende Eigenschaften und Aufgaben einer wirtschaftlichen Sintermetallbindung für Abrasivwerkzeuge bekannt:

Ausreichende Haltekräfte für das Schleifkorn zur Verhinderung von vorzeitigem Ausfall von Schleifkorn. Ist die Bindungsmatrix zu weich, können die Schleifkörner durch die Schnittkräfte an den Kornschneiden in ihrer Bindungsumgebung gelockert werden, was zu vorzeitigem Kornausfall mit unwirtschaftlichem Arbeitsergebnis führt. Wenn zuviele Körner vorzeitig ausfallen, kommt es zusätzlich zu erschwerten Arbeitsbedingungen, gekennzeichnet durch hohe Reibungsverluste an der Berührungsfläche zwischen Bindungsrücken und zu bearbeitendem Werkstoff. Solche Betriebszustände äußern sich durch hohe Leistungsaufnahme, verringerten Bohr-, Schleif- oder Trennfortschritt, oftmals verbunden mit erhöhter Lärmentwicklung und Funkenflug.

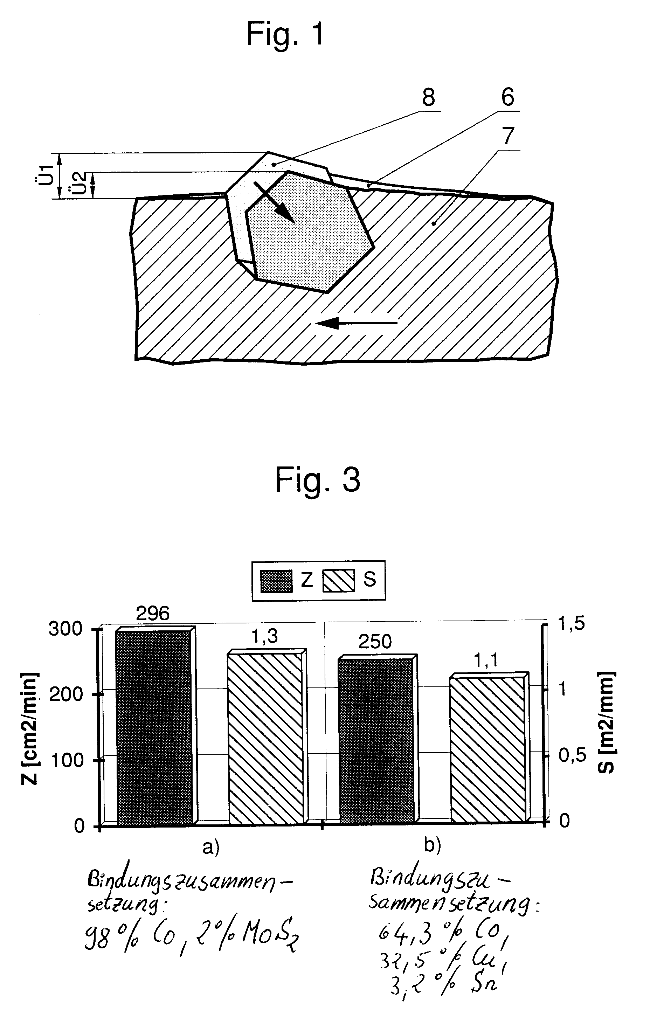

Eine weitere Erscheinung von zu weichen Einbindeeigenschaften der Metallbindung gegenüber dem Hochleistungsschneidstoff Diamant oder kubischem Bornitrid ist die Gefahr des Eindrückens und/oder des Weiterschiebens von Schneidkörnern in der Bindung. Diese Gefahr tritt besonders dann auf, wenn ohne Flüssigkeitskühlung gearbeitet wird. Fig. 1 zeigt schematisch die Verlagerung von Schleifkorn in einer durch zu hohe Wärmeeinwirkung teigig gewordenen Bindung. Der Effekt ist wie vorhin geschildert Reibungsverlust, hohe Leistungsaufnahme, Funkenflug, geringe Schnittleistung und hohe Lärmentwicklung, da die Schneidkanten der Schleifkörner unter der Bindungsoberfläche verschwinden.

Zusätzlich zur Aufbringung der Haltekräfte für das Korn muß die Bindung in ihrem Verschleißverhalten gegenüber dem Werkstückwerkstoff und seinen Abspanprodukten, gegenüber den Bearbeitungseinstellwerten, gegenüber dem Kühlmittel Luft oder Flüssigkeit optimiert werden. Ist die Bindungsmatrix zu verschleißend, werden die Schleifkörner vorzeitig durch die Schleifspäne herausgearbeitet. Wiederum ist unwirtschaftliches Arbeiten die Folge, da die Körner zu rasch freigelegt werden. Wenn dagegen die Bindung zu verschleißfest vorgesehen wird, wird das Schleifkorn zu lange gehalten und dies kann zu einem Abstumpfen durch Verrunden der Schneidkanten und damit zu einem Verlust der Schneideigenschaften des Werkzeuges führen.

Stand der Technik ist es, die Bindermatrix durch den Zusatz von Hartstoffen wie z.B. Wolframkarbid verschleißfester zu gestalten. Der umgekehrte Effekt, eine Verringerung des Verschleißwiderstandes, wird durch die Zugabe von Kupfer, Zinn, Silber bzw. deren Legierungen erzielt. Solche Maßnahmen sind z.B. von J.R. Chalkley, D.M. Thomas: "The tribological aspects of metal-bonded diamond grinding wheels" in Powder Metallurgy 1969, Vol. 12 Seite 591/592 und von J.Konstanty: "The material science of stone sawing" in Industriediamanten Rundschau 1/91, Seite 28/29 beschrieben. Die beschriebenen, auflockernden Metalle und Legierungen sind gegenüber den bekannten Bindungsmetallen für Hochleistungsschleifkörnungen wie Kobalt, Eisen, Nickel, Wolfram usw. durch einen niedrigen Schmelzpunkt von kleiner als 1100°C gekennzeichnet, d.h. sie liegen bei den für die Herstellung von Diamant- oder kubischen Bornitrid-Werkzeugen üblichen Sintertemperaturen in der Regel zumindest teilweise als flüssige Phase vor. Diese flüssige Phase kann erwünscht sein, da dadurch das Schleifkorn besser benetzt werden kann während des Sintervorgangs und somit eine bessere Verbindung zwischen Korn- und Metallbindung hergestellt werden kann.

Diese nach dem Stand der Technik bekannten Mischungen von höherschmelzenden Bindungsmetallen und deren Legierungen mit Flüssigphasenmetallen und deren Legierungen weisen jedoch erhebliche Nachteile auf:

Bei der Herstellung und insbesondere bei der Massenherstellung von Schleifkorn Diamant enthaltenden Schleif-, Trennschleif- und Bohrwerkzeugen für die Bau- und Gesteinsindustrie wird in der Regel das Drucksinterpressen angewandt. Dabei wird das Prinzip der Kurzschlußstromerhitzung bzw. die induktive Erhitzung für die Erzeugung der benötigten Prozeßwärme herangezogen.

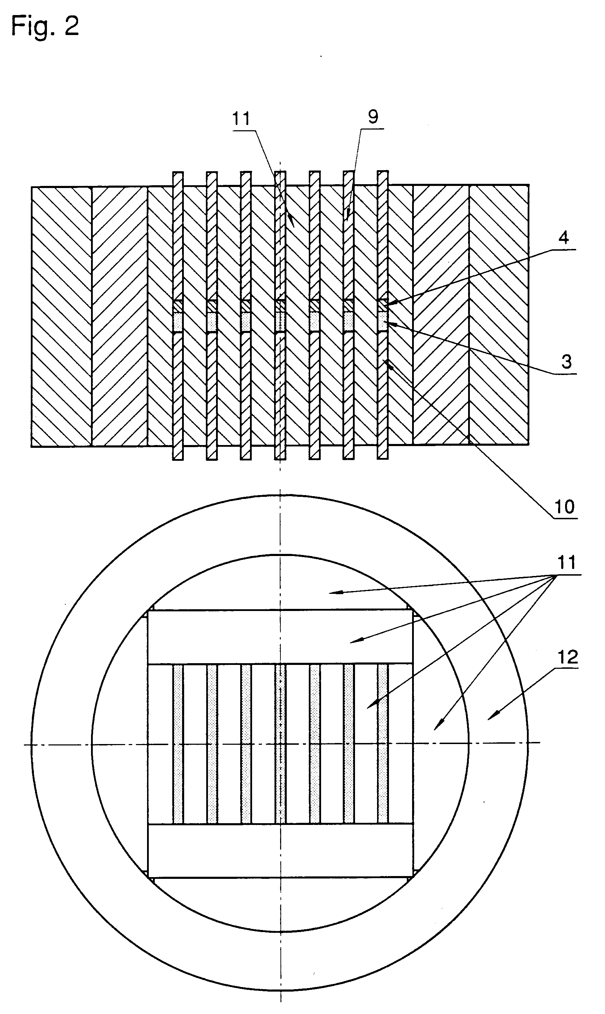

Beispielsweise können dafür Maschinen aus dem Lieferprogramm der Fa. Dr. Fritsch TSP15AT, TSP25AT, TSP353P oder von der Fa. Sintris 10ST, 11ST2, 11ST verwendet werden. Dabei kommen mehrteilige Sinterformen entsprechend Fig. 2 zum Einsatz, in denen während des Sinterns in der Regel ein Temperaturgradient auftritt, da im Zentrum des zu sinternden Segmentes eine teilweise bis zu 40°C höhere Temperatur auftritt als in den Außenbereichen des Segmentes. Beim in der Praxis üblichen Drucksintern wird bei Vorhandensein einer flüssigen Phase diese im Zentrumsbereich stärker ausgepreßt als in den Randbereichen, was zu unerwünschten Inhomogenitäten wie Maß-, Gefüge- und Härteschwankungen und den sogenannten Auskocherscheinungen führt.

Für Diamantwerkzeuge für die Bau- und Gesteinsindustrie werden nach dem Stand der Technik die den Schneidbelag bildenden hochleistungs-abrasivstoffhaltigen metallgebundenen Segmente zweiteilig erzeugt. Der äußere schneidende Teil des Schneidbelages wird nach der für den Anwendungsfall typischen Spezifikation aufgebaut, während der innen dem Trägerkörper zugewandte Teil als sogenannte neutrale Zone ausgeführt wird. Eine solche neutrale Zone hat keine, nur verminderte oder minderwertige Schneidstoffinhalte. Zweck der neutralen Zone ist es, diesen Bereich auf die optimale Verbindung zwischen Stahlträgerkörper und Schneidsegmenten auszurichten. Die Verbindung zwischen Stahlstammblatt und den Segmenten wird meist durch Laserschweißen hergestellt. Erhebliche Probleme und Einschränkungen ergaben sich nach dem Stand der Technik, wenn der Bindungsmatrix neben hochschmelzenden Metallen wie dem vorzugsweise verwendeten Kobalt anwendungsbedingt niedrigschmelzende Metalle bzw. niedrigschmelzende Legierungen beigegeben werden mußten. In diesen Fällen kam es während des Sinterns zum Eindringen einer Flüssigphase in die neutrale Zone, was ein erhebliches Hindernis für die verläßliche Herstellung einer hochfesten Schweißverbindung darstellte.

Solche weichmachenden Bestandteile der Bindung sind anwendungsbedingt z.B. für die Bearbeitung von Weichgestein erforderlich. Derartige Anwendungsfälle werden in der Regel nur in gelöteter Ausführung hergestellt, da die aufweichenden Legierungsbestandteile der Bindungsmatrix mit den Loten eng verwandt und gut verträglich sind. Dagegen ist ein Schweißvorgang zwischen diesen nach dem bisherigen Stand der Technik mit Lotmetallen durchflossenen neutralen Zonen der Schneidsegmente nur schwierig oder unwirtschaftlich durchzuführen. Eine solche unwirtschaftliche Methode ist beispielsweise die Anfertigung einer von im Verhältnis zum Schneidteil des Segmentes besonders hohen neutralen Zone aus dem teuren Bindungsmaterial.

Mit dem Trägerkörper verschweißte anstatt verlötete Schneidsegmente sind aber in den meisten Anwendungsfällen, auch bei Bearbeitung von sogenannten weichen Gesteinswerkstoffen, aus Sicherheitsgründen erwünscht und im Sinne des Fortschritts anzustreben.

In der FR-A-2 129 687 wird Molybdändisulfid als schmierender Füllstoff für metallgebundene Diamantschleifscheiben zum Präzisionsschleifen von Hartmetall ohne Kühlschmierflüssigkeit beansprucht.

Es ist daher Aufgabe der vorliegenden Erfindung, eine problemlos schweißbare neutrale Zone zwischen äußerem Schneidbereich der Hochleistungsschneidstoff enthaltenden Segmente und dem Trägerkörper zu schaffen, wenngleich die Segmentspezifikation mit anwendungsbedingten Auflockerungs- bzw. Weichmacherbestandteilen versehen ist. Es war ein Stoff zu suchen, der alle bekannten Vorteile modernster Schweiß- und Sintertechnologie erlaubt bei gleichzeitiger Freiheit der Bindungsmatrixgestaltung gegenüber allen anwendungstechnischen Gesichtspunkten der Werkzeugverbraucher. Ein solcher Zusatzstoff mußte sich gegenüber dem Schweißverfahren völlig störungsfrei verhalten und mindestens die gleiche Anpassungsfähigkeit bzw. Verbesserung der Schneideigenschaften des Werkzeuges bei erhöhter Sicherheit gegen Ablösung der Schneidsegmente vom Stahlträger beim Einsatz der erfindungsgemäßen Werkzeuge erfüllen.

Eine weitere Aufgabe der Erfindung ist die Verbesserung der Schneideigenschaften und die Verbesserung der Anpassungsmöglichkeiten der Schneideigenschaften der Segmente gegenüber dem Anwendungsfall und die verbesserte Reproduzierbarkeit der eingestellten Segmentqualität.

Eine weitere Aufgabe der vorliegenden Erfindung ist die Schaffung von bis zu 1200°C warmfesten Sintermetallbindungen ohne Verschiebung und Eindrückung von Schneidstoffkörnern in ihrer Bindungsumgebung bei erschwerten Einsatzbedingungen wie in Fig. 1 dargestellt.

Diese Aufgaben werden dadurch gelöst, daß die Sintermetallbindung feinstverteilte Metallsulfide mit einer Korngröße von 0,1 bis 1,5 Mikrometer in Anteilen von 0,2 bis 20 Gewichtsprozent enthält, enthält und die Sintermetallbindung bei Temperaturen bis 1200°C stabil im festen Aggregatzustand bleibt.

Ein Merkmal des verwendeten Metallsulfids ist dessen Feinkörnigkeit von 0,1 bis 1,5 µm Korngröße und dessen gleichmäßige Feinverteilung durch das gesamte Schneidsegment, bestehend aus der Schneidstoff enthaltenden Verschleißzone und der schneidstofflosen neutralen Bindungszone, wodurch mit relativ geringen Gewichtsprozentsätzen von 0,2 bis 2 % gearbeitet werden kann, um die geforderte Schweißbarkeit zwischen Stahlträger und Schneidsegment herbeizuführen.

Nachfolgend wird die Erfindung unter Bezugnahme auf die beigefügten Zeichnungen weiter erläutert. Es zeigen:
Fig. 1 eine schematische Darstellung einer Schneidkornverschiebung in einer zu weichen Sintermetallbindung;
Fig. 2 eine Prinzipdarstellung einer Mehrfachsinterform zur Herstellung erfindungsgegenständlicher Schneidsegmente;
Fig. 3 eine grafische Darstellung der Ergebnisse eines Schneidversuches mit erfindungsgemäßer und Standard-Zusammensetzung;
Fig. 4 eine Prinzipdarstellung eines erfindungsgemäßen Schneidwerkzeuges.

Fig. 1 zeigt ein Schneidstoffkorn (8) vor und nach der Verschiebung bzw. dem Eindrücken bei Verwendung einer Sintermetallbindung mit weichmachenden, niedrigschmelzenden Legierungsbestandteilen wie Cu, Sn, Ag und deren Legierungen. In Schneidversuchen mit erfindungsgemäß zusammengesetzten Sintermetallbindungen, die nur aus hochschmelzendem Bindungsmetallanteil bestehen, zeigt an sich keinerlei Kornverschiebungen, da beim Trockenbearbeiten des Gesteinsmaterials keine Wiederverflüssigung von weichmachenden Gefügebestandteilen der Sintermetallbindung auftreten konnte.

Fig. 2 zeigt eine Prinzipdarstellung einer Mehrfachsinterform zur Herstellung erfindungsgegenständlicher Schneidsegmente wie im nachstehend beschriebenen Fertigungsbeispiel von erfindungsgemäßen Schneidsegmenten verwendet.

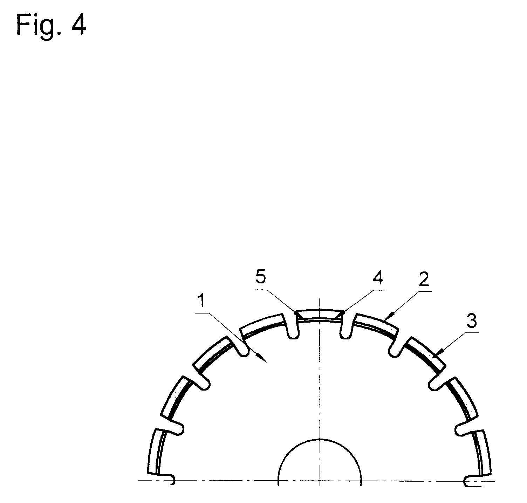

Fig. 3 zeigt die Versuchsergebnisse eines Schneidversuchs im Vergleich mit einer erfindungsgemäßen - a) - und einer Standardzusammensetzung - b) - der Sintermetallbindung. Die spezifische Zerspanungsleistung Z als eine der wichtigsten Kenngrößen für abrasive Zerspanungsprozesse stieg dabei nur unwesentlich von 250 cm² pro Minute auf 296 cm² pro Minute. Ebenso stieg die spezifische Standfläche S beim erfindungsgemäßen Abrasivwerkzeug nur von 1,1 auf 1,3 m² pro Millimeter nutzbare Segmenthöhe. Die Wertesteigerungen wurden dadurch erreicht, daß die erfindungsgemäße Zugabe von Metallsulfid, bevorzugt Molybdändisulfid, in definierter, feinkörniger Form mit Korngrößen von 0,3 bis 0,5 µm erfolgte. Da keine Flüssigphase beim Sintern der erfindungsgemäßen Schneidsegmente auftritt, kann auch keine der beim Stand der Technik geschilderten Inhomogenitäten von metallischen Auflockerungen des Bindungsgefüges auftreten, hingegen bleibt der beabsichtigte Auflockerungsgrad über das gesamte Schneidsegment homogen verteilt und reproduzierbar, was die Wertesteigerung gegenüber dem Stand der Technik verursacht.

Die erfindungsgemäßen Metallsulfide sind bei den üblichen Sintertemperaturen von bis zu 1100°C, die in Sonderfällen bis zu 1200° steigen kann, nicht verflüssigbar, sodaß bei den für die Herstellung von Diamant- und CBN-Werkzeugen notwendigen Sintertemperaturen keine flüssige Phase auftritt. Es können daher keine Infiltrationen von störenden Metallen in die auf den Schweißvorgang optimierte neutrale Zone (4) der Schneidsegmente auftreten. Die erfindungsgemäßen Metallsulfide sind die Sulfide der Gruppe der Metalle Wolfram, Molybdän, Chrom, Eisen, bevorzugt jedoch Molybdändisulfid. Das Molybdändisulfid wird als Pulver mit Prozentsätzen von bevorzugt 0,2 bis 2 % zugegeben. Geeignete Molybdändisulfidpulver sind z.B. von der Fa. H.C. Starck mit einer durchschnittlichen Teilchengröße von 0,3-0,5 um unter der Bezeichnung "M5" erhältlich.

Nachstehend wird ein Vergleichsversuch zwischen einem nach dem Stand der Technik gefertigten Werkzeug zum Trockenschneiden und einem erfindungsgemäß mit beispielsweise 2 % Molybdändisulfidpulver gefertigten Werkzeug beschrieben und in Fig. 3 dargestellt. (Zerspanungsleistung und spezifische Standfläche auf Herschenberger Granit mit petrologischer Beschaffenheit: 30-40 % Alkalifeldspat, 20% Plagioklas, 30-35 % Quarz, 7-13 % Glimmer).

Es wurden Trockenschnittsägen zur Gesteinsbearbeitung gefertigt, deren Bindung aus folgenden Pulvermischungen bestand:
a) einer erfindungsgemäßen Zusammensetzung mit 2 % Molybdändisulfidpulver (Molyform M5 der Firma HC Starck mit einer durchschnittlichen Teilchengröße von 0,3 bis 0,5 µm) und 98 % Kobaltpulver mit einer mittleren Teilchengröße von ca. 1,5 µm und
b) einer Zusammensetzung nach dem Stand der Technik mit 64,3 % Kobaltpulver mit einer mittleren Teilchengröße von 1,5 µm, 32,5 % Kupferpulver mit einer mittleren Teilchengrößen von 5 um und 3,2 % Zinnpulver mit einer mittleren Teilchengröße von 10 µm.

Die Pulvermengen wurden 30 Minuten in einem Schüttelmischer "Turbula" der Firma Bachofen trocken und 15 Minuten mit 1 % Polyethylenglykol angefeuchtet gemischt. Anschließend wurden die beiden Pulvermischungen 30 Minuten mit synthetischen Diamanten der Korngröße 300-420 µm gemischt; die Dosierung erfolgte dabei so, daß die Diamantkonzentration im gesinterten Segment 18 betrug (Konzentration 100 entspricht 4,4 Karat pro Kubikzentimeter).

Die Diamant-Pulvermischungen wurden mit 500 kp/cm² vorverdichtet; auf die vorverdichteten Grünlinge wurde in der Preßform eine neutrale Zone bestehend aus Kobaltpulver aufgeschüttet; anschließend wurde der Grünling mit neutraler Zone mit einem Druck von 2000 kp/cm² kaltgepreßt. Je fünf der Grünlinge wurden in einer mehrteiligen Graphitsinterform nach Fig. 2 bei 800°C, einem Sinterdruck von 300 kp/cm² und einer Sintertemperaturhaltezeit von 3 Minuten gesintert.

Die Segmente der Zusammensetzung b) wiesen aufgrund der oben erwähnten Gefügeunregelmäßigkeiten einen Härtebereich von 205-322 HB nach Brinell auf, der Härtebereich der Segmente mit der erfindungsgemäßen Zusammensetzung a) lag dagegen bei 270-335 HB. Jeweils 16 Segmente wurden auf ein Stahlstammblatt mit einer Laserschweißmaschine Rofin-Sinar RS 1500 aufgeschweißt und anschließend im Trockenpendelschnitt auf Herschenberger Granit eingesetzt. Dabei erwies sich das Werkzeug mit der erfindungsgemäßen Zusammensetzung a) dem Werkzeug mit der Standardzusammensetzung b) bezüglich Standfläche und Zerspanungsleistung überlegen wie Fig. 3 zeigt.

### Bezeichnungsliste

- 1: Stahlträgerkörper
- 2: Schneidfläche
- 3: Verschleißzone
- 4: Schneidstofflose Bindungszone
- 5: Verbindungsfläche
- 6: Stützkeil
- 7: Sintermetallbindung
- 8: Schneidstoffkorn
- 9: Oberstempel
- 10: Unterstempel
- 11: Formteil
- 12: Formteil
- Ü: Kornüberstand
- S: Bezogene Standfläche
- Z: Zerspanungsleistung

## Patentansprüche

1. Abrasivwerkzeug, bestehend aus einem Stahlträgerkörper (1) und durch Schweißen, insbesondere durch Laserschweißen, damit verbundene, mit einer Sintermetallbindung unter Verwendung von einem oder mehreren hochschmelzenden Metallpulvern gebundene, Hochleistungsschneidstoff, wie Diamant und/oder kubisches Bornitrid, enthaltende Schneidsegmente, wobei eine vorzugsweise schneidstofflose Bindungszone (4) zwischen dem Stahlträgerkörper (1) und der schneidstoffhaltigen Verschleißzone (3) der Schneidsegmente angeordnet ist, die Sintermetallbindung feinstverteilte Metallsulfide mit einer Korngröße von 0,1 bis 1,5 Mikrometer in Anteilen von 0,2 bis 20 Gewichtsprozent enthält, und die Sintermetallbindung bei Temperaturen bis 1200 °C stabil im festen Aggregatzustand bleibt.

2. Abrasivwerkzeug nach Anspruch 1, dadurch gekennzeichnet, daß die Metallsulfide Sulfide der Metalle aus der Gruppe Wolfram, Molybdän, Chrom, Eisen, seltene Erden oder Mischungen davon sind.

3. Abrasivwerkzeug nach Anspruch 1 oder 2, dadurch gekennzeichnet, daß das Metallsulfid MoS2 ist.

4. Abrasivwerkzeug nach einem der Ansprüche 1 bis 3, dadurch gekennzeichnet, daß die Korngröße des verwendeten Metallsulfidpulvers 0,2 bis 0,5 Mikrometer beträgt.

5. Abrasivwerkzeug nach einem der Ansprüche 1 bis 4, dadurch gekennzeichnet, daß der Metallsulfidanteil an der Sintermetallbindung der Schneidsegmente (3) 0,2 bis 2,0 Gewichtsprozent beträgt.

6. Verwendung von Abrasivwerkzeugen nach einem der Ansprüche 1 bis 5 zum Schleifen, Trennschleifen, Sägen oder Bohren von mineralischen oder Mineralstoff enthaltenden Werkstückstoffen, wie Natur- oder Kunststein, Keramik, Beton und verfüllten Kunststoffen.

## Claims

1. Abrasive tool, consisting of a steel core (1) and through welding, in particular laser welding, connected as a result, bonded with a sintered metal bond by the use of one or several high-melting metal powders, cutting segments containing high performance cutting material such as diamond and/or cubical boron nitride, whereby a bond zone free of cutting material (4) is preferably arranged between the steel core (1) and the cutting material containing abrasion zone (3) of the cutting segments, the sintered metal bond contains dispersed metal sulfides with a grit size from 0,1 up to 1,5 micrometer in proportions of 0,2 up to 20 weight percentage, and the sintered metal bond remains solid at temperatures up to 1200°C.

2. Abrasive tool according to claim 1, characterized in that the metal sulfides are sulfides of metals from the group of wolfram, molybdenum, chrome, iron, rare earths or mixtures of them.

3. Abrasive tool according to claim 1 or 2, characterized in that the metal sulfide is MoS2.

4. Abrasive tool according to one of the claims 1 to 3, characterized in that the grit size of the metal sulfide powder used, amounts to 0,2 up to 0,5 micrometer.

5. Abrasive tool according to one of claims 1 to 4, characterized in that the metal sulfide share of the sintered metal bond of the cutting segments (3) amounts to 0,2 to 2,0 weight percent.

6. Use of abrasive tools according to one of the claims 1 to 5 for grinding, cut-off grinding, sawing or drilling of workpiece materials containing mineral or mineral aggregate, such as natural or artificial stone, ceramic, concrete and filed synthetic material.

## Revendications

1. Outil abrasif composé d'un support en acier (1) et de segments de coupe reliés à celui-ci par soudage, en particulier soudage par laser, liés avec une liaison de métal fritté, avec utilisation d'un ou de plusieurs métaux réfractaires pulvérisés, contenant une matière de coupe hautement performante, comme le diamant et/ou le nitrure cubique de bore, une zone de liaison (4) de préférence sans matière de coupe étant située entre le support en acier (1) et la zone d'usure (3), contenant de la matière de coupe, des segments de coupe, la liaison de métal fritté contenant des sulfures de métal finement dispersés, d'un calibre de 0,1 à 1,5 micromètres en portions de 0,2 à 20 pourcents du poids, et la liaison de métal fritté restant stable à l'état solide jusqu'à des températures atteignant 1200°C.

2. Outil abrasif selon revendication 1, caractérisé par le fait que les sulfures de métal sont des sulfures des métaux du groupe tungstène, molybdène, chrome, fer, terres rares ou des mélanges de ceux-ci.

3. Outil abrasif selon revendication 1 ou 2, caractérisé par le fait que le sulfure de métal est MoS2.

4. Outil abrasif selon l'une des revendications 1 à 3, caractérisé par le fait que le calibre de la poudre de sulfure de métal utilisée est de 0,2 à 0,5 micromètres.

5. Outil abrasif selon l'une des revendications 1 à 4, caractérisé par le fait que la quantité de sulfure de métal dans la liaison de métal fritté des segments de coupe (3) s'élève de 0,2 jusqu'à 2,0 pourcents du poids.

6. Utilisation d'outils abrasifs selon l'une des revendications 1 à 5, pour affûter et polir, tronçonner par abrasion, scier ou perforer les matériaux des pièces à usiner, minéraux ou contenant des aggrégats minéraux, comme la pierre naturelle ou artificielle, la céramique, le béton et les matières artificielles composées.
